Europäisches Patentamt

(19) European Patent Office

Office européen des brevets

(11) Publication number: **0 311 171 B1**

# EUROPEAN PATENT SPECIFICATION

(12)

(45) Date of publication of patent specification:
**10.07.91 Bulletin 91/28**

(51) Int. Cl.⁵ : **D03J 1/00, B25J 15/04**

(21) Application number: **88202078.7**

(22) Date of filing: **23.09.88**

(54) **Device for coupling components which can move relative to each other, and a transport mechanism which uses this device.**

(30) Priority: **09.10.87 BE 8701154**

(43) Date of publication of application:
**12.04.89 Bulletin 89/15**

(45) Publication of the grant of the patent:
**10.07.91 Bulletin 91/28**

(84) Designated Contracting States:
**CH DE FR IT LI**

(56) References cited:
**EP-A- 0 120 275**
**DE-U- 8 629 693**

(73) Proprietor: **Picanol N.V.**
**Polenlaan 3-7**
**B-8900 Ieper (BE)**

(72) Inventor: **Shaw, Henry**
**Zuiddreef 5**
**B-8982 Vleteren (BE)**

(74) Representative: **Donné, Eddy**
**Bureau M.F.J. Bockstael nv Arenbergstraat 13**
**B-2000 Antwerpen (BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention concerns a device for coupling of components which can move relative to each other, and a transport mechanism which uses this device.

In particular, the invention concerns a device by means of which complementary connectors, mounted respectively on components which can move relative to each other, can automatically fit together, even if the movable components are not positioned precisely with respect to each other. The complementary connectors fit together essentially by plugging into each other.

The device according to the invention is primarly meant to be used for transport mechanisms in weaving mills, which as is known consist of a rail or guide which runs e.g. above the machines, and an automatic device which travels along this rail. Such automatic devices carry out transport and positioning of all sorts of peripheral equipment for the weaving machines, such as e.g. a thread repair unit for repairing broken warp threads, a device for freeing a weft thread, etc.

In order to control e.g. such a repair device, it is necessary to supply via the movable automatic device the necessary control signals, compressed air and in some cases the necessary mechanical drive. For this purpose, it is useful for the automatic device to be able to draw compressed air from the rail along which it travels, by means of a connection to a compressed air line which is laid along the rail. It is also useful if the necessary control signals, coming from the weaving machine and used to control the peripheral equipment, can be supplied to the automatic device via the rail.

Here, however, there is the practical problem that an automatic device can be positioned with an accuracy of only a few millimeters with respect to a certain point along the rail, e.g. by means of a limit switch and/or detectors. This means that the necessary connections cannot be made simply by plugging together two complementary connectors, since such connectors, one of which is fixed to the rail and the other of which is mounted on the automatic device, usually have to be positioned accurately with respect to each other.

The present invention concerns a device which systematically avoids this disadvantage.

For this purpose, the present invention concerns a device for coupling together components which can move relative to each other, consisting essentially of: a first part, mounted on one of the above-mentioned components, consisting of a base, a carrier which can move relative to the base, elastic devices which force the carrier into a central position, and a first coupling mounted on the carrier and having a number of connectors ; and a second part, mounted on the second of the above-mentioned components, consisting of a second coupling which can fit together with the connectors of the first coupling, a drive mechanism for moving the couplings towards or away from each other, and a locating device to position the connectors with respect to each other, as a result of which the first carrier may or may not be forced out of its central position.

The first coupling should preferably be mounted so that it may be slid with respect to the carrier, such that the abovementioned drive mechanism can move this coupling along a guide.

If the complementary connectors mounted on the first and second couplings are not positioned precisely opposite each other when the first and second couplings are being coupled, a connection can still be made, in particular because said guides position the connectors relative to each other, such that the first coupling, and thus also said carrier, is moved in against the force of said elastic device until the complementary connectors are located opposite and in line with each other.

In order to explain the characteristics of the invention, some preferred embodiments are described, by way of example only and without being limitative in any way, with reference to the accompanying drawings, where :

- fig. 1 is a schematic diagram of a transport mechanism in a weaving mill, which uses the coupling device according to the invention ;
- fig. 2 shows the device for coupling together components which can move relative to each other.
- fig. 3 is a cross-section along line III-III in fig. 2;
- fig. 4 is a cross-section of the part indicated in fig. 2 by F4, to a greater scale ;
- figs. 5 and 6 illustrate schematically the operation of the device according to the invention ;
- figs. 7 and 8 show variants of the invention ;
- fig. 9 is a cross-section along line IX-IX in fig. 8.

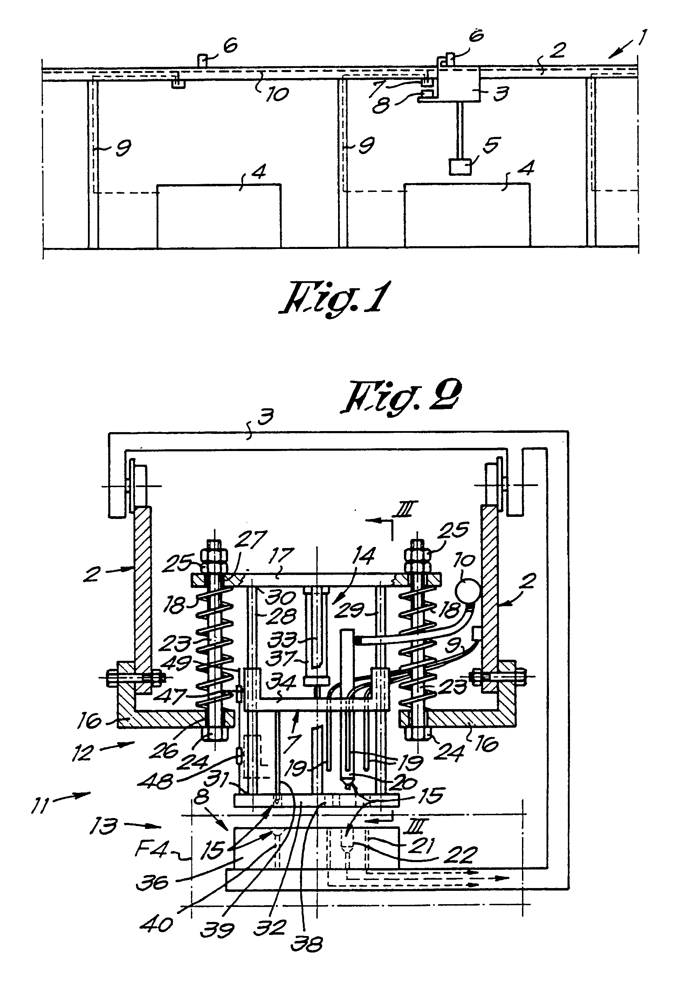

Fig. 1 shows a transport mechanism 1 for weaving mills, consisting essentially of a rail 2 and one or more automatic devices 3 which can travel along the rail, for example traveling over the weaving machines 4. Mounted on the automatic device 3 is a peripheral device 5 which can be presented to the weaving machines 4, for example a device for repairing broken warp threads. Along the rail 2 are positioning elements 6, such as stops or detectors, which can act on the automatic device 3 in order to make it stop at a point determined by the positioning element 6.

According to the present invention, a connection can be made automatically between the rail 2 and the automatic device 3 by means of couplings 7 and 8, which are mounted on the rail and the automatic device respectively and which can fit together in a complementary way. These couplings 7 and 8 carry a number of electric and pneumatic connections, so that the automatic device 3 itself does not have to have own compressed air supply or whatever. In the embodiment shown, control lines 9 coming from the relevant weaving machine 5 are connected to the automatic device 3, in order to control the movements of the peripheral device 5. Furthermore, the automatic device 3 is also connected to a common compressed air line 10 and/or a vacuum line.

Since the positioning elements 6 enable the couplings 7 and 8 to be positioned with respect to each other with an accuracy of only a few millimetres, it is clear that such measures have to be taken in order to enable the couplings 7 and 8 to fit together even if they are not located precisely with respect to each other. A mechanism 11 is therefore used to couple the parts which move relative to each other, in this case the rail 2 and the automatic device 3, as described in the introduction.

As shown in fig. 2, this device 11 consists essentially of : a first part 12, mounted on one of the above-mentioned components which can move relative to each other, in this case the rail 2 ; a second part 13, connected to the second of the above-mentioned components, in this case the automatic device 3 ; a drive mechanism 14 to move said couplings 7 and 8 towards each other ; and locating devices 15 which position the couplings 7 and 8 relative to each other, as described further in the detailed explanation. The first part 12 according to the invention consists essentially of : a base 16 ; a carrier 17 which can move relative to the base 16 ; elastic devices 18 to force the carrier into a central position ; and said first coupling 7, which is mounted on the carrier 17 and which has a number of connectors 19 and 20. The second part 13 consists essentially of said second coupling 8, which carries the connectors 21 and 22, which fit together with the connectors 19 and 20 on the first coupling 7.

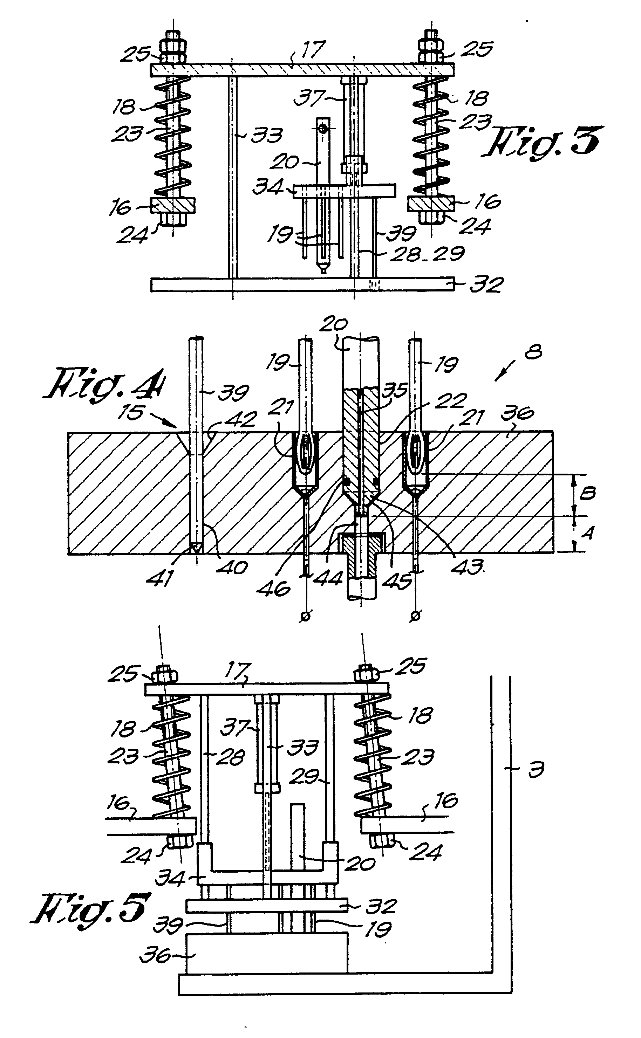

In the embodiment shown in figs. 2 and 3, the base 16 consists of a horizontal plate which is attached solidly to the rail 2. The carrier 17 also consists of a plate which essentially is mounted above the support 16 and parallel to it, and which can move to a certain extent with respect to the base 16 as it is attached to the base by e.g. four bolt-shaped components 23 whose ends are fitted with stops 24 and 25, such that said bolt-shaped components 23 sit in the openings 26 and 27 of the base 16 and in the carrier 17 with a fair amount of play. As shown in the figures, the bolt-shaped components 23 consist of bolts whose aforementioned stops 24 and 25 are formed by the heads and the nuts respectively. The base 16 and the carrier 17 are pressed apart against the respective stops 24 and 25 by means of the above-mentioned elastic devices 18, which in this case consist of compression springs fitted over the bolt-shaped components 23.

The first coupling 7 is mounted essentially parallel to the carrier 17 by e.g. two guides 28 and 29 which permit vertical movement with respect to the carrier 17. The guides 28 and 29 consist of bars fixed at one end 30 to the carrier 17 and connected to each other at their other end 31 by the connecting plate 32. As shown in fig. 3, between the carrier 17 and the connecting plate 32 there should preferably be a third connecting piece 33, so that the carrier 17, the guides 28 and 29, the connecting piece 33 and the connecting plate 32 form a very rigid construction.

In order for the first coupling 7 to be able to slide along the guides 28 and 29, said coupling consists essentially of a slide 34.

In the embodiment shown, the connectors 19 and 20 of the first coupling 7 consist of pins which make an electrical and a pneumatic connection respectively. As shown in fig. 4, connector 20 consists of a contact pin which is hollow, i.e. which has an air supply channel 35.

The second coupling 8 consists essentially of a body 36 whose connectors 21 and 22 consist of sockets or tubes mounted in this body.

The drive mechanism 14 which moves the couplings 7 and 8 towards each other consists, in the embodiment shown, of a pressure cylinder 37 mounted between the carrier 17 and the first coupling 7, such that said coupling can be moved over the guides 28 and 29. Clearly, the connecting plate 32 has the necessary passages 38 for the connectors 19 and 20.

The above-mentioned locating devices 15 are shown in detail in fig. 4 and consist of a locating pin 39 which is mounted on the first coupling 7 and which fits into a locating channel 40 in the body 36, together with a number of the above-mentioned connectors, which are shaped so as to have a locating function. The locating pin 39 has a point and/or a rounded end 41, while the opening of the channel 40 has a conical widening 42. In the embodiment shown, the connectors 20 and 22 of the pneumatic connection provide extra locating, in particular by means of the narrow end 43 of the connector 20, while the opening of the compressed air channel 44 has a funnel-shaped widening 45.

Here it should be noted that the bottom ends of the locating pin 39, the connector 20 and the electrical connectors 19 are mounted at different distances A and B from each other, so that first the locating pin 39, then the robust connector 20 which provides the pneumatic connection, and finally the electrical connectors 19 make contact with the second coupling 8. In order to prevent loss of pressure when connectors 20 and 22 are coupled, the end 43 should preferably have an O-ring 46 round its circumference.

The operation of the device 11 can be simply deduced from figs. 1 to 6. Initially, the automatic device 3 is situated at a particular point on the rail 1 by means of the positioning devices 6, thus bringing the couplings 7 and 8 opposite each other with an accuracy of a few millimeters. The pressure cylinder 37 is then actuated, with the result that coupling 7 moves downwards, so that in the first instance the end 41 of the locating pin 39 enters the conical widening 42, and then as the coupling 7 is pushed down further the couplings 7 and 8 are automatically located with respect to each other. As the coupling 7 is pushed down still further, even better location is obtained by connectors 20 and 22 fitting together. Only at the last moment is an electrical connection formed, specifically between connectors 19 and 21.

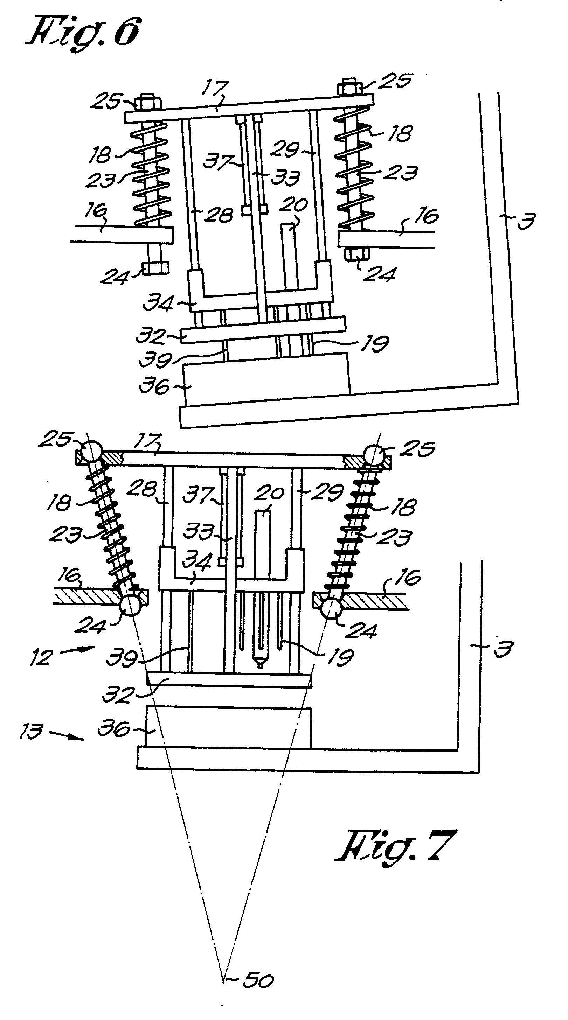

The locating effect is shown schematically in figs. 5 and 6. If the couplings 7 and 8 are parallel but not directly above each other, during the fitting together of couplings 7 and 8 the bolt-shaped components 23 are inclined against the pressure of the springs 18, while the couplings 7 and 8 still remain parallel to each other.

If the couplings 7 and 8 are not parallel to each other initially, the carrier 17 will be inclined, as shown in fig. 6.

Clearly, it is also possible for detectors 47 and 48 to be mounted beside the movable coupling 7, e.g. attached to the connecting plate 32 by means of a mounting 49, in order to check whether coupling has in fact been achieved, and to check whether uncoupling has been achieved when the couplings 7 and 8 are drawn apart.

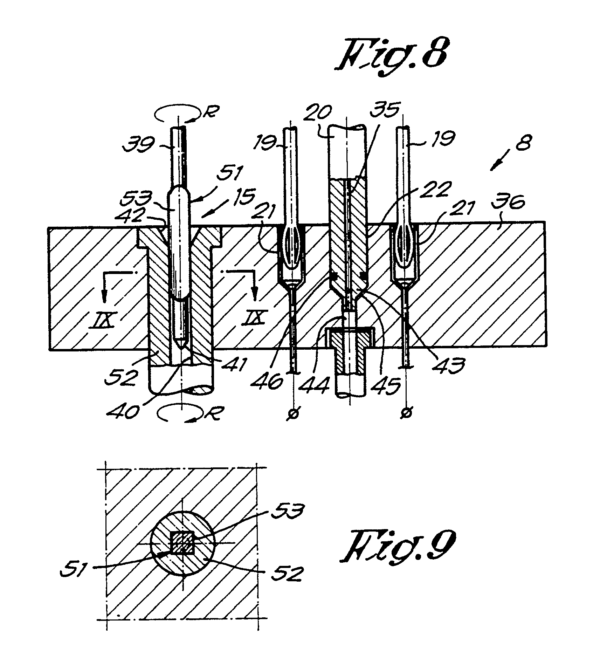

Fig. 7 shows another variant in which the bolt-shaped components 23 are at an angle to each other, such that that the intersection 50 of their longitudinal axes is preferably situated underneath the connectors 19 and 20 of the first coupling 7, when the latter is in the lowest position. This configuration offers the advantage that the forces exerted on the locating devices 15 during location are lower than in the other variant.

Figs. 8 and 9 show a variant in which the couplings 7 and 8 contain connectors 51 and 52 respectively which provide mechanical transmission, such that during fitting together of the couplings 7 and 8 a screwing movement carried out by connector 51 is transmitted to connector 52. In the variant shown, the connector 51 is formed by the above-mentioned locating pin 39, which has a non-cylindrical e.g. square part 53, while connector 52 consists of a part which is swivel-mounted in the body 36, which in this case has a square cross-section 40. The connector 52 is connected to e.g. a peripheral device. The locating pin 39 or the connector 51 can be driven by e.g. a motor (not shown). This enables a mechanical couple or a rotation R to be transmitted between the connectors 51 and 52.

The present invention is not limited to the embodiments described by way of example and shown in the drawings ; on the contrary, such a device for coupling of components which can move relative to each other, and the transport mechanism which uses said device, can be made in all sorts of forms and dimensions while still remaining within the scope of the invention.

## Claims

1. Device for coupling of components (2, 3) which can move relative to each other, of the type in which complementary connectors (19, 20, 51 ; 21, 22, 52) fit together automatically, characterized in that it consists essentially of : a first part (12), mounted on one of the above-mentioned components (2, 3), consisting of a base (16), a carrier (17) which can carry out a displacement relative to the base (16), elastic devices (18) to force the carrier (17) into a central position, a first coupling (7) which is mounted on the carrier (17) and which carries a number of connectors (19, 20, 51) ; a second part (13), mounted on the second of the above-mentioned components (2, 3), consisting of a second coupling (8) with connectors (21, 22, 52) which can fit together with the connectors (19, 20, 51) of the first coupling (7) ; a drive mechanism (14) in order to move at least the couplings (7, 8) towards each other ; and locating devices (15) to locate the connectors (19, 20, 51 ; 21, 22, 52) relative to each other, thus resulting in the displacement of the carrier (17) against the working of the elastic devices (18).

2. Device according to claim 1, characterized in that the carrier (17) consists of a plate situated at a certain distance from the base (16), while the above-mentioned elastic devices (18) consist of springs which press apart the carrier (17) and the base (16), such that the carrier (17) and the base (16) are kept more or less parallel to each other by means of bolt-shaped components (23) with stops (24, 25) at their ends (30, 31), where said bolt-shaped components (23) are held captive with a considerable amount of play in the openings (26, 27) in the base (16) and in the carrier (17).

3. Device as in claim 2, characterized in that the bolt-shaped components (23) consist of bolts, where said stops (24, 25) are formed by their heads and nuts respectively.

4. Device as in claim 2, characterized in that the elastic devices (18) which force the carrier (17) into a central position consist of compression springs fitted round the bolt-shaped components (23).

5. Device as in any of the above claims, characterized in that the first coupling (7) is essentially mounted parallel to the carrier (17) by means of guides which permit a vertical movement of said first coupling (7) with respect to the carrier (17), where the movement of said first coupling (7) with respect to the carrier (17) is effected by the above-mentioned drive mechanism (14).

6. Device as in claim 5, characterized in that said guides (28, 29) consist of guide bars with one end (30) mounted vertically on the carrier (17) and connected to each other at the other end (31) by a connecting plate (32), and that the first coupling (7) consists essentially of a slide (34) which slide over guide bars.

7. Device as in claim 5 or 6, characterized in that the drive mechanism (14) consists essentially of a pressure cylinder mounted between the carrier (17) and the first coupling (7) respectively.

8. Device as in any of the above claims, characterized in that the locating devices (15) which can locate the connectors (19, 20 ; 21, 22) with respect to each other consist of at least a locating pin (39) mounted on one of the two couplings (7) and a locating channel (40) in the other coupling (8), where said locating pin (39) has a tapered end (41), while the opening of said channel (40) has a conical widening (42).

9. Device as in any of the above claims, characterized in that the above-mentioned locating devices (15) which can locate the connectors with respect to each other consist of at least a pair of the above-mentioned connectors (20, 22), where said connectors consist of one pin-shaped connector (20) with a tapered end (43) and a another connector (22) which fits with it, consisting of a socket with a funnel-shaped widening (45).

10. Device as in claim 9, characterized in that the connectors (20, 22), which also act as locating devices (15) for positioning, consist of connectors which provide a pneumatic connection.

11. Device as in any of the above claims, characterized in that the couplings (7, 8) are fitted with connectors (51, 52) respectively, which can transmit a mechanical movement (R).

12. Device as in any of the above claims, characterized in that one of the couplings (7, 8) is fitted with a locating pin (39) and pin-shaped connectors (19, 20) for forming an electrical and pneumatic connection respectively, where the bottom ends of said connectors (19, 20) and of the plug (39) are arranged so that first the locating plug (39), then the connector (20) for forming a pneumatic connection, and finally the connectors (19) for forming the electrical connection are presented to the second coupling.

13. Device as in claim 3, characterized in that the bolt-shaped elements are mounted parallel to each other.

14. Device as in any of the above claims, characterized in that at least some of the bolt-shaped components (23) are mounted at an angle, such that the intersection (50) of their axes is beneath the point at which the couplings (7, 8) fit together.

15. Device as in any of the above claims, characterized in that beside one of the couplings (7, 8) are mounted detectors (47, 48) which check the relative position of the couplings (7, 8).

16. Transport mechanism which uses the device according to any of claims 1 to 14, characterized in that the components which can move relative to each other are formed respectively by a rail (2) and an automatic device (3) which can travel along said rail, where the above-mentioned first part (12) is attached to the rail (2) and the above-mentioned second component (13) is attached to the automatic device (3).

**Ansprüche**

1. Eine Vorrichtung zum Verbinden von Komponenten (2, 3), die zueinander beweglich sind, von dem Typ, bei dem komplementäre Verbindungsstücke (19, 20, 51 ; 21, 22, 52) automatisch zusammenpassen, gekennzeichnet dadurch, daß sie sich im wesentlichen zusammensetzt aus : einem ersten Teil (12), das an einer der vorgenannten Komponenten (2, 3) befestigt ist, bestehend aus einer Basis (16), einem Träger (17), der in bezug auf die Basis (16) verschoben werden kann, elastischen Vorrichtungen (18), um den Träger (17) in eine zentrale Position zu zwingen, einer ersten Kupplung (7), die an dem Träger (17) befestigt ist und die eine Anzahl von Verbindungsstücken (19, 20, 51) aufweist ; einem zweiten Teil (13), das an der zweiten der vorgenannten Komponenten (2, 3) befestigt ist, bestehend aus einer zweiten Kupplung (8) mit Verbindungsstücken (21, 22, 52), passend zu den Verbindungsstücken (19, 20, 51) der ersten Kupplung (7) ; einem Antriebsmechanismus (14), um mindestens die Kupplungen (7, 8) aufeinander zu zu bewegen ; und Haltevorrichtungen (15), um die Verbindungsstücke (19, 20, 51 ; 21, 22, 52) in bezug zueinander zu fixieren und so die Verschiebung des Trägers (17) gegen die Funktion der elastischen Vorrichtungen (18) herbeizuführen.

2. Die Vorrichtung gemäß Anspruch 1, gekennzeichnet dadurch, daß der Träger (17) aus einer Platte besteht, die sich in einem gewissen Abstand von der Basis (16) befindet, während die vorgenannten elastischen Vorrichtungen (18) aus Federn bestehen, die den Träger (17) und die Basis (16) auseinanderdrücken, so daß der Träger (17) und die Basis (16) mittels bolzenförmiger Komponenten (23) mit Anschlägen (24, 25) an ihren Enden (30, 31) mehr oder weniger parallel zueinander gehalten werden, wobei die erwähnten bolzenförmigen Komponenten (23) mit einem beträchtlichen Spielraum in den Öffnungen (26, 27) in der Basis (16) und im Träger (17) festgehalten werden.

3. Die Vorrichtung gemäß Anspruch 2, gekennzeichnet dadurch, daß die bolzenförmigen Komponenten (23) aus Bolzen bestehen, wobei die erwähnten Anschläge (24, 25) jeweils von deren Köpfen und Muttern gebildet werden.

4. Die Vorrichtung gemäß Anspruch 2, gekennzeichnet dadurch, daß die elastischen Vorrichtungen (18), die den Träger (17) in eine zentrale Position zwingen, aus Druckfedern bestehen, die um die bolzenförmigen Komponenten (23) angebracht sind.

5. Die Vorrichtung gemäß einem der vorgenannten Ansprüche, gekennzeichnet dadurch, daß die erste Kupplung (7) im wesentlichen parallel zum Träger (17) befestigt ist und zwar mittels Führungen, die eine vertikale Bewegung der erwähnten ersten Kupplung (7) in bezug auf den Träger (17) erlauben, wobei die Bewegung der erwähnten ersten Kupplung (7)in bezug auf den Träger (17) durch den oben erwähnten Antriebsmechanismus (14) ausgeführt wird.

6. Die Vorrichtung gemäß Anspruch 5, gekennzeichnet dadurch, daß die erwähnten Führungen (28, 29) aus Führungsstangen bestehen, von denen ein Ende (30) vertikal am Träger (17) befestigt ist und die am anderen Ende (31) durch eine Anschlußplatte (32) verbunden sind, und daß die erste Kupplung (7) im wesentlichen aus einem Gleitstück (34) besteht, das über die Führungsstangen gleitet.

7. Die Vorrichtung gemäß Anspruch 5 oder 6, gekennzeichnet dadurch, daß der Antriebsmechanismus (14) im wesentlichen aus einem zwischen dem Träger (17) und der ersten Kupplung (7) angebrachten Druckzylinder besteht.

8. Die Vorrichtung gemäß einem der vorgenannten Ansprüche, gekennzeichnet dadurch, daß die Haltevorrichtungen (15), welche die Verbindungsstücke (19 20 ; 21, 22) in bezug aufeinander halten können, aus mindestens einem Haltestift (39) bestehen, der an einer der beiden Kupplungen (7) befestigt ist, sowie aus einem Haltekanal (40) in der anderen Kupplung (8), wobei der erwähnte Haltestift (39) ein kegelfömiges Ende (41) aufweist, während die Öffnung des erwähnten Kanals (40) eine konische Verbreiterung (42) aufweist.

9. Die Vorrichtung gemäß einem der vorgenannten Ansprüche, gekennzeichnet dadurch, daß die oben erwähnten Haltevorrichtungen (15), welche die Verbindungsstücke in bezug aufeinander halten können, aus mindestens einem Paar der oben erwähnten Verbindungsstücke (20, 22) bestehen, wobei die erwähnten Verbindungsstücke aus einem stiftförmigen Verbindungsstück (20) mit einem kegelförmigen Ende (43) und einem dazu passenden anderen Verbindungsstück (22) bestehen, das aus einem Sockel mit einer trichterförmigen Verbreiterung (45) besteht.

10. Die Vorrichtung gemäß Anspruch 9, gekennzeichnet dadurch, daß die Verbindungsstücke (20, 22), die ebenfalls als Haltevorrichtungen (15) zum Positionieren dienen, aus Verbindungsstücken bestehen, die eine pneumatische Verbindung bieten.

11. Die Vorrichtung gemäß einem der vorgenannten Ansprüche, gekennzeichnet dadurch, daß die Kupplungen (7, 8) jeweils mit Verbindungsstücken (51, 52) ausgestattet sind, die eine mechanische Bewegung (R) übertragen können.

12. Die Vorrichtung gemäß einem der vorgenannten Ansprüche, gekennzeichnet dadurch, daß eine der Kupplungen (7, 8) mit einem Haltestift (39) und stiftförmigen Verbindungsstücken (19, 20) ausgestattet ist, um jeweils eine elektrische und eine pneumatische Verbindung zu bilden, wobei die unteren Enden der erwähnten Verbindungsstücke (19, 20) und des Bolzens (39) so angeordnet sind, daß zuerst der Haltebolzen (39), dann das Verbindungsstück (20) zur Bildung einer pneumatischen Verbindung und schließlich die Verbindungsstücke (19) zur Bildung der elektrischen Verbindung der zweiten Kupplung vorgelegt werden.

13. Die Vorrichtung gemäß Anspruch 3, gekennzeichnet dadurch, daß die bolzenförmigen Elemente parallel zueinander angebracht sind.

14. Die Vorrichtung gemäß einem der vorgenannten Ansprüche, gekennzeichnet dadurch, daß mindestens einige der bolzenförmigen Komponenten (23) in einem Winkel angebracht sind, so daß sich der Schnittpunkt (50) ihrer Achsen unterhalb des Punktes befindet, an dem die Kupplungen (7, 8) ineinanderpassen.

15. Die Vorrichtung gemäß einem der vorgenannten Ansprüche, gekennzeichnet dadurch, daß neben einer der Kupplungen (7, 8) Detektoren (47, 48) angebracht sind, welche die relative Position der Kupplungen (7, 8) kontrollieren.

16. Der Transport Mechanismus daß die Vorrichtung gemäß einem der Ansprüche 1 bis 14 gebraucht, gekennzeichnet dadurch, daß die zueinander beweglichen Komponenten jeweils aus einer Schiene (2) und einer automatischen Vorrichtung (3) bestehen, die entlang der erwähnten Schiene beweglich ist, wobei das oben erwähnte erste Teil (12) an der Schiene (2) befestigt ist und das oben erwähnte zweite Teil (13) an der automatischen Vorrichtung (3) befestigt ist.

**Revendications**

1. Dispositif de couplage d'ensembles (2, 3) mobiles l'un par rapport à l'autre, du type dans lequel des connecteurs complémentaires (19, 20, 51 ; 21, 22, 52) s'ajustent automatiquement l'un dans l'autre, caractérisé par le fait qu'il se compose pour l'essentiel des éléments suivants : une première partie (12), montée sur un des ensembles (2, 3) mentionnés ci-dessus, composée d'une base (16), d'un élément porteur (17) pouvant se déplacer par rapport à la base (16), de dispositifs élastiques (18) destinés à centrer l'élément porteur (17), un premier coupleur (7), fixé sur l'élément porteur (17) et comportant un certain nombre de connecteurs (19, 20, 51) ; une deuxième partie (13), montée sur le deuxième ensemble (2, 3) mentionné ci-dessus, constituée d'un second coupleur (8) comportant des connecteurs (21, 22, 52) s'ajustant dans les connecteurs (19, 20, 51) du premier coupleur (7) ; un mécanisme d'entraînement (14) destiné à rapprocher au moins les coupleurs (7, 8) l'un de l'autre ; et des dispositifs de repérage (15) destinés à repérer le positionnement des connecteurs (19, 20, 51 ; 21, 22, 52) les uns par rapport aux autres, ayant pour effet de déplacer l'élément porteur (17) à l'opposé du fonctionnement des dispositifs élastiques (18).

2. Dispositif selon la revendication 1, caractérisé par le fait que l'élément porteur (17) est constitué d'une plaque située à une certaine distance de la base (16) et que, pour leur part, les dispositifs élastiques (18) mentionnés ci-dessus sont des ressorts dont la pression écarte l'élément porteur (17) et la base (16), de telle manière que l'élément porteur (17) et la base (16) sont maintenus plus ou moins parallèles l'un par rapport à l'autre au moyen de pièces en forme de boulon (23) comportant des arrêts (24, 25) à leurs extrémités (30, 31), ces pièces en forme de boulon (23) étant retenues avec un jeu important dans les perçages (26, 27) de la base (16) et de l'élément porteur (17).

3. Dispositif selon la revendication 2, caractérisé par le fait que les pièces en forme de boulon (23) sont constituées de boulons dont les têtes et les écrous forment, respectivement, les arrêts (24, 25).

4. Dispositif selon la revendication 2, caractérisé par le fait que les dispositifs élastiques (18) destinés à centrer l'élément porteur (17) sont constitués de ressorts à pression enroulés autour des éléments en forme de boulon (23).

5. Dispositif selon l'une des revendications précédentes, caractérisé par le fait que pour l'essentiel le premier coupleur (7) est maintenu parallèle à l'élément porteur (17) à l'aide de guides autorisant le déplacement vertical de ce premier coupleur (7) par rapport à l'élément porteur (17), le déplacement de ce premier coupleur (7) par rapport à l'élément porteur (17) étant effectué par le mécanisme d'entraînement (14) mentionné ci-dessus.

6. Dispositif selon la revendication 5, caractérisé par le fait que les guides (28, 29) mentionnés sont constitués de barres de guidage, dont une extrémité (30) est fixée perpendiculairement à l'élément porteur (17), et reliées entre elles à leur autre extrémité (31) au moyen d'une plaque de connexion (32), et que le premier coupleur (7) consiste pour l'essentiel en une glissière (34) coulissant le long de barres de guidage.

7. Dispositif selon les revendications 5 ou 6, caractérisé par le fait que le mécanisme d'entraînement (14) se compose pour l'essentiel d'un vérin monté entre l'élément porteur (17) et le premier coupleur (7), respectivement.

8. Dispositif selon l'une des revendications précédentes, caractérisé par le fait que les dispositifs de repérage (15) pouvant faire correspondre les connecteurs (19, 20 ; 21, 22) consistent en au moins un ergot de repérage (39) monté sur un des deux coupleurs (7) et un canal de repérage (40) pratiqué dans l'autre coupleur (8), l'ergot de repérage (39) ayant un bout conique (41) et l'ouverture du canal de repérage (40), un évasement conique (42).

9. Dispositif selon l'une des revendications précédentes, caractérisé par le fait que les dispositifs de repérage (15) mentionnés ci-dessus, et pouvant faire correspondre les connecteurs, consistent en au moins une paire de connecteurs (20, 22) mentionnés ci-dessus, ces connecteurs consistant en un connecteur (20) étant profilé en broche à bout conique (43) et un autre connecteur correspondant (22) étant un culot à évasement en entonnoir (45).

10. Dispositif selon la revendication 9, caractérisé par le fait que les connecteurs (20, 22), servant également de dispositifs de repérage (15), sont des connecteurs établissant une connexion pneumatique.

11. Dispositif selon l'une des revendications précédentes, caractérisé par le fait que les coupleurs (7, 8) sont équipés de connecteurs (51, 52), respectivement, pouvant transmettre un mouvement mécanique (R).

12. Dispositif selon l'une des revendications précédentes, caractérisé par le fait qu'un des coupleurs (7, 8) est équipé d'un ergot de repérage (39) et de connecteurs profilés en ergot (19, 20) destinés à établir une connexion électrique et pneumatique respectivement, les extrémités inférieures de ces connecteurs (19, 20) et de l'ergot (39) étant disposées de telle manière que c'est d'abord l'ergot de repérage (39), ensuite le connecteur (20) servant à la connexion pneumatique, et enfin le connecteur (19) servant à la connexion électrique qui sont présentés au deuxième coupleur.

13. Dispositif selon la revendication 3, caractérisé par le fait que les pièces en forme de boulon sont montées en parallèle.

14. Dispositif selon l'une des revendications précédentes, caractérisé par le fait qu'au moins certaines des pièces en forme de boulon (23) sont montées en formant un angle tel que l'intersection (50) de leurs axes se trouve plus bas que le point de couplage des coupleurs (7, 8).

15. Dispositif selon l'une des revendications précédentes, caractérisé par le fait que des détecteurs (47, 48), destinés à contrôler la position relative des coupleurs (7, 8), sont montés à côté de l'un des coupleurs (7, 8).

16. Mécanisme de transport utilisant le dispositif selon l'une des revendications 1 à 14, caractérisé par le fait que les ensembles pouvant se déplacer l'un par rapport à l'autre sont constitués d'un rail (2) et d'un dispositif automatique (3), respectivement, pouvant se déplacer le long de ce rail, la première partie (12) mentionnée ci-dessus étant fixée au rail (2) et la seconde partie (13) mentionnée ci-dessus étant fixée au dispositif automatique (3).

**Fig.1**

**Fig.2**

Fig.3

Fig.4

Fig.5

*Fig.6*

*Fig.7*

*Fig.8*

*Fig.9*